# EUROPEAN PATENT APPLICATION

(11) **EP 2 221 745 A1**
(43) Date of publication of application: **25.08.2010**
(21) Application number: 09251416.5
(22) Date of filing: 28.05.2009
(51) Int. Cl.: G06K 7/10

(54) **Optical sensing device**

(30) Priority: 20.02.2009 TW 98105419
(71) Applicant: Everlight Electronics Co., Ltd., Tucheng T'ai pei (TW)
(72) Inventor: Hung, Shang-Ho, Tucheng, Taipei (TW); Liang, Chun-Chih, Tucheng, Taipei (TW)
(74) Representative: Oxley, Robin John George

(57) **Abstract**

An optical sensing device (100) is suitable for detecting information on an information plane (120). The optical sensing device includes a light source (110), an optical grating (140) and an optical detector (130). The light source is suitable for providing a light beam along a first axis (112). The light beam is illuminated on the information plane and is converted into an optical signal (116) exiting the information plane. The optical grating has at least one split (142). The optical detector is suitable for receiving the optical signal to generate the information. The optical signal passes through the split of the grating and reaches the optical detector along a second axis (132) that is positioned at an angle with respect to the first axis.

## Description

### BACKGROUND OF THE INVENTION

### 1. Field of the Invention

The present invention relates generally to a sensing device, and more particularly, to an optical sensing device.

### 2. Description of Related Art

In general, ink jet or laser printers have a test print function which mainly aims to make sure the printed characters/images can be positioned in correct positions on a sheet of paper. For example, a light emitting diode and an optical detector are typically used as an optical sensing device of the printer to determine whether or not the ink cartridge is in a correct position which is explained below in detail.

Firstly, light emitted from the light emitting diode strikes a specific bar code on the paper. The optical detector is then used to receive light reflected by the paper. Whether or not the ink cartridge is in a correct position is thus determined based on an optical signal detected by the optical detector.

In the conventional technology, in order to sense and recognize the bar code, a split is usually fabricated in a chip of the optical detector. The split is usually fabricated using a semiconductor process. In addition, as the width of the bar code varies, the width of the split is required to change accordingly. In general, the greater the width of the bar code, the greater of the width of the split. Therefore, change in the width of the bar code may affect the recognition ability of the optical sensing device thus reducing the sensing ability. In other words, the conventional design as least has the following disadvantages:
1. The conventional optical sensing device can only sense the bar code with a fixed width. When the bar code changes in width, it may cause defective sensing and recognition.
2. Mask design is required to fabricate the split in the chip of the optical detector, which increases the fabrication cost and time.
3. If the angle between the light emitting diode and the optical detector is unduly large, it may cause defective sensing or sensing failure.

### SUMMARY OF THE INVENTION

Accordingly, the present invention is directed to an optical sensing device which can effectively reduce the fabrication cost and time as well as have a simplified design and improved recognition ability.

Aspects of the present invention provide an optical sensing device for detecting information on an information plane. In aspects, the optical sensing device includes a light source, an optical grating, and an optical detector. The light source is, in aspects, suitable for providing a light beam along a first axis. In aspects, the light beam strikes the information plane and is converted into an emergent optical signal. The optical grating, in aspects, has at least one split. The optical detector is, in aspects, suitable for receiving the optical signal to generate the information. The optical signal, in aspects, passes through the split of the optical grating and reaches the optical detector along a second axis that is positioned at an angle with respect to the first axis.

According to one embodiment of the present invention, the width of the split is substantially within the range between 0.5µm to 1.0µm.

According to one embodiment of the present invention, the material of the optical grating is at least one of metal, ceramic and plastic.

According to one embodiment of the present invention, the optical sensing device further includes a housing enclosing the light source and the optical detector. The housing at least has a first opening and a second opening. The light beam passes through the first opening and strikes the information plane, and the emergent optical signal converted by the information plane is transmitted sequentially through the second opening and the optical grating before reaching the optical detector.

According to one embodiment of the present invention, the angle is substantially within the range between 10 to 40 degrees.

According to one embodiment of the present invention, the wavelength range of the light beam is substantially within the range between 350nm to 1100nm.

According to one embodiment of the present invention, the optical detector comprises a focal length and the information plane is positioned at the focal length.

According to one embodiment of the present invention, the information is a plane with at least one bar code thereon.

According to one embodiment of the present invention, the optical detector is a light emitting diode or a photo transistor (PT).

According to one embodiment of the present invention, the light source is a light emitting diode.

According to one embodiment of the present invention, the optical grating is disposed between the information plane and the optical detector of the optical sensing device, which is used to replace the conventional practice that the split is fabricated in the chip of the optical detector using a mask process. Therefore, the fabrication cost and the fabrication time can be reduced. In addition, the width of the optical grating can be adjusted freely as desired and therefore the optical sensing device can be easily designed and conveniently replaced. Moreover, the recognition ability of the optical sensing device can be effectively improved by properly reducing the angle between the light source and the optical detector.

In order to make the aforementioned and other features and advantages of the present invention more comprehensible, embodiments accompanied with figures are described in detail below.

### BRIEF DESCRIPTION OF THE DRAWINGS

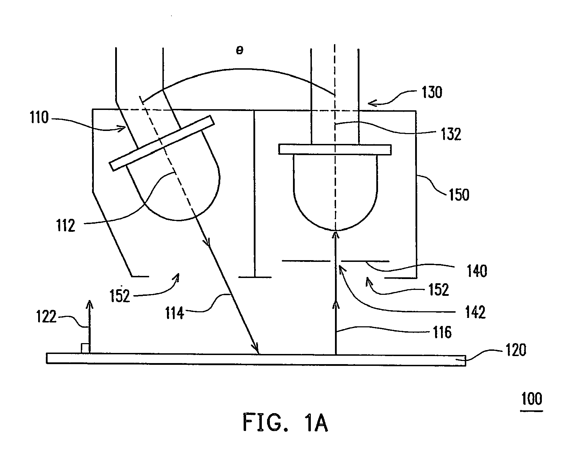

Fig. 1A illustrates an optical sensing device according to one embodiment of the present invention.

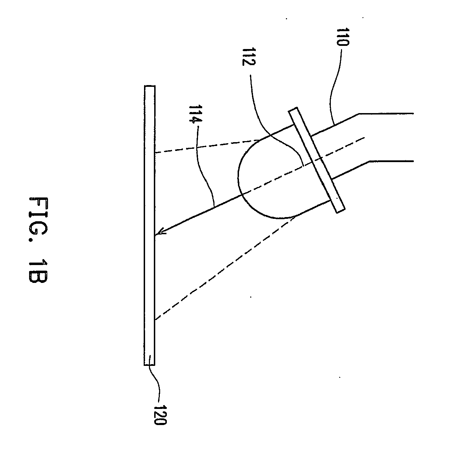

Fig. 1B illustrates a light source striking an information plane of Fig. 1A.

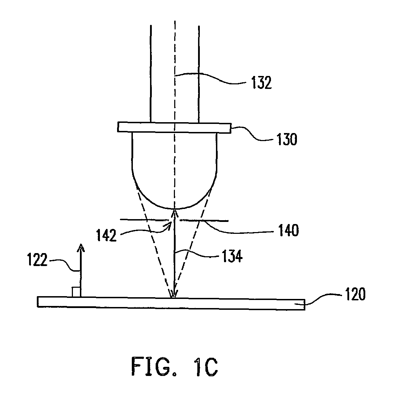

Fig. 1C illustrates an optical detector receiving an optical signal from the information plane of Fig. 1A.

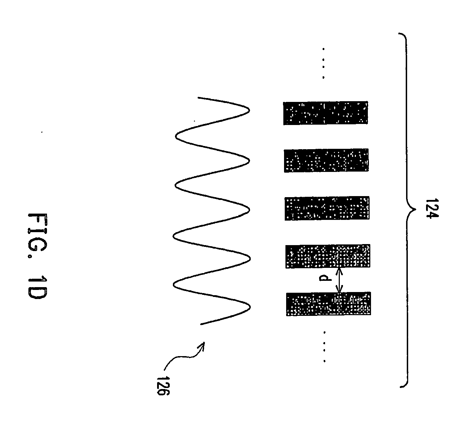

Fig. 1D illustrates a pattern of the bar code on the information plane.

### DESCRIPTION OF THE EMBODIMENTS

Fig. 1A illustrates an optical sensing device according to one embodiment of the present invention. Fig. 1B illustrates a light source striking an information plane of Fig. 1A. Fig. 1C illustrates an optical detector receiving an optical signal from the information plane of Fig. 1A. Referring to Figs. 1A, 1B and 1C, the optical sensing device 100 of the present embodiment is suitable for detecting information on the information plane 120 and includes a light source 110, an optical detector 130, and an optical grating 140.

The light source 110 is suitable for providing a light beam 114 along a first axis 112 as shown in Fig. 1A and Fig. 1B. In the present embodiment, the light source 110 is, for example, a light emitting diode. However, this is only illustrative and should not be considered as limiting. Rather, the light source 110 may be a laser light source or another suitable light source in alternative embodiments. In addition, the wavelength range of the light beam 114 provided by the light source 110 varies with different type and material of the source 110. In the present embodiment, the wavelength range of the light beam 114 is preferably within the range of 350nm to 1100nm. However, the wavelength range of 350nm to 1100nm is only a preferred configuration but should not be considered as limiting. Therefore, the light beam 114 may have a wavelength outside the wavelength range illustrated above. Besides, the light beam 114 is illuminated on the information plane 120 may have a diverging light shape as shown in Fig. 1B. However, in alternative embodiments, a focusing lens may be used to cause the light beam 114 striking the information plane 120 to have a converging light shape. The configuration of Fig. 1B is illustrative only and should not be used to limit the present invention.

The information plane 120 is disposed on the travelling path of the light beam 114 and converts the light beam 114 into an emergent optical signal 116 as shown in Fig. 1A. In the present embodiment, the information plane 120 is, for example, a plane having at least one bar code disposed thereon as shown in Fig. 1D. Fig. 1D illustrates a pattern of the bar code on the information plane. In Fig. 1D, the bar code 124 is configured such that it has a regular arrangement with uniform bar code gaps d. However, in alternative embodiment, the bar code 124 may also be configured to present an irregular arrangement with different bar code gaps d. The configuration of Fig. 1D is illustrative only and should not be used to limit the present invention. In addition, since the information plane 120 has at least one bar code 124, as the light beam 114 in illuminated on the bar code 124, the reflective light will carry the bar code information 126 as shown in Fig. 1D and the light carrying the bar code information 126 is the optical signal 116 of the present embodiment.

The optical detector 130 is suitable for receiving the optical signal from the information plane 120 to generate the information. In the present embodiment, the optical detector 130 is disposed on the travelling path of the optical signal 116. The optical signal 116 passes through a split 142 of the optical grating 140 and reaches the optical detector 130 along a second axis 132. The second axis 132 is parallel to a normal direction of the information plane 120, and the second axis 132 is positioned at an angle θ with respect to the first axis 112, as shown in Fig. 1A and Fig. 1C. In the present embodiment, the optical detector 130 is implemented, for example, by a light emitting diode or a photo transistor (PT). In particular, the optical detector 130 is mainly used to receive the optical signal 116 from the information plane 120 and sense the information of the bar code 124. Typically, the optical detector 130 has a focal length 134 and the information plane 120 is disposed at the focal length 134, as shown in Fig. 1C. As such, the optical detector 130 can better receive the optical signal 116 from the information plane 120.

The optical grating 140 has at least one split 142. The optical grating 140 is disposed on the travelling path of the optical signal 116 and between the information plane 120 and the optical detector 130, as shown in Fig. 1A. In the present embodiment, the optical grating 140 functions like the people's eye pupil and allows the optical signal 116 carrying the bar code information 126 to be transmitted through a distance d of the split 142 and into the optical detector 130, thereby allowing the optical detector 130 to successfully sense an image of the bar code. Similarly, as the width d of the bar code is increased, the width of the split 142 is increased correspondingly. As such, as long as the optical grating 140 with a suitable split 142 width is used by replacing the optical grating 140 as desired, the optical sensing device 100 can better sense the image information of the bar code 124. In other words, by adopting the concept of the optical grating 140, the optical sensing device 100 of the present embodiment can avoid fabricating the split in the chip using the traditional semiconductor process, thus simplifying the design and reducing the fabrication cost of the optical sensing device.

In addition, preferably, the width of the split 142 is substantially within the range between 0.5µm to 1.0µm. However, this is only illustrative and should not be used to limit the present invention. Rather, in alternative embodiments, the width of the split 142 may be other suitable values. Furthermore, the material of the optical grating 140 may be one of metal, ceramic, plastic, or combination thereof, or another suitable material according to actual requirement. The optical grating 140 is illustrated as being plastic in the present embodiment but should not be limited to the particular embodiment described herein.

In the present embodiment, to achieve a modular optical sensing device 100, the optical sensing device 100 may further include a housing 150 enclosing the light source 110 and the optical detector 130. The angle θ formed between the first axis 112 and the second axis 132 is substantially within the range between 10 to 40 degrees. It should be noted that, within the above range of the angle θ, the optical sensing device 100 can have higher sensing sensitivity. However, in alternative embodiments, the angle θ may be other suitable values. Therefore, the above range is only illustrative and should not be used to limit the present invention.

Besides, the housing 150 at least has a first opening 152 and a second opening 154. The light beam 144 is transmitted through the first opening 152 before reaching the information plane 120, and the optical signal 116 converted by the information plane 120 is transmitted sequentially through the second opening 154 and the optical grating 140 before reaching the optical detector 130, as shown in Fig. 1A. Therefore, in addition to achieving a modular design of the optical sensing device 100, the housing 150 can also provide a protecting function without affecting the transmission of the light beam 114 and the optical signal 116.

In summary, the optical sensing device of the present invention as least has the following advantages. An optical grating is disposed between the information plane and the optical detector of the optical sensing device, which is used to replace the conventional practice that the split is fabricated in the chip of the optical detector using a mask process. By such replacement, the fabrication cost and the fabrication time can be reduced. In addition, by using the optical grating design, the optical grating can be replaced with another one having a different optical grating width anytime as desired. Therefore, the optical sensing device can be easily designed and conveniently replaced. Moreover, the optical sensing device of the present invention can effectively improve the recognition ability of the optical sensing device by properly reducing the angle between the light source and the optical detector.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An optical sensing device for detecting information on an information plane, the optical sensing device comprising:
a light source for providing a light beam along a first axis, the light source being arranged to emit the light beam to be illuminated on the information plane and be converted into an optical signal exiting the information plane;
an optical grating having at least one split; and
an optical detector for receiving the optical signal to generate the information, the optical grating being arranged to allow the optical signal to pass through the split to reach the optical detector along a second axis that is positioned at an angle with respect to the first axis.

2. An optical sensing device according to claim 1, wherein the width of the split is substantially within the range between 0.5µm to 1.0µm.

3. An optical sensing device according to claim 1 or 2, wherein the material of the optical grating is at least one of metal, ceramic and plastic.

4. An optical sensing device according to any preceding claim, further comprising a housing enclosing the light source and the optical detector, wherein the housing comprises at least a first opening and a second opening, the first opening being arranged to allow the light beam to pass through and be illuminated on the information plane, and the second opening and the optical grating being arranged to allow the optical signal converted by the information plane to be transmitted sequentially therethrough before reaching the optical detector.

5. An optical sensing device according to any preceding claim, wherein the angle is substantially within the range between 10 to 40 degrees.

6. An optical sensing device according to any preceding claim, wherein the light source is configured to produce a wavelength range of the light beam substantially within the range between 350nm to 1100nm.

7. An optical sensing device according to any preceding claim, wherein the optical detector comprises a focal length, in use, and the information plane is positioned at the focal length.

8. An optical sensing device according to any preceding claim, wherein the device is arranged to detect information in a plane with at least one bar code thereon.

9. An optical sensing device according to any preceding claim, wherein the optical detector is a light emitting diode or a photo transistor.

10. An optical sensing device according to any preceding claim, wherein the light source is a light emitting diode.

11. A method of detecting information on an information plane, the method comprising:
providing a light beam along a first axis, the light beam being illuminated on the information plane and being converted into an optical signal exiting the information plane; and
receiving the optical signal to generate the information, the optical signal passing through the split of an optical grating and reaching an optical detector along a second axis that is positioned at an angle with respect to the first axis.
